# EUROPÄISCHE PATENTSCHRIFT

(11) **EP 0 451 638 B1**
(45) Veröffentlichungstag und Bekanntmachung des Hinweises auf die Patenterteilung: **21.07.1993**
(21) Anmeldenummer: 91105012.8
(22) Anmeldetag: 28.03.1991
(51) Int. Cl.: B60T 17/08

(54) **Bremszylinder für Bremsanlagen von Fahrzeugen, insbesondere Nutzfahrzeugen**
Brake cylinder for vehicles, especially commercial vehicles
Cylindre de freinage pour véhicules, notamment véhicules utilitaires

(30) Priorität: 11.04.1990 DE 4011739
(43) Veröffentlichungstag der Anmeldung: 16.10.1991
(73) Patentinhaber: KNORR-BREMSE AG, 80710 München (DE)
(72) Erfinder: Kielbasa, Rudolf Josef, W-8047 Karlsfeld (DE); Siebke, Alf, W-8000 München 2 (DE); Tschewik, Herbert, W-8048 Haimhausen (DE)

(56) Entgegenhaltungen:
- EP-A- 0 218 845
- FR-A- 2 637 859

## Beschreibung

Die Erfindung betrifft einen Bremszylinder nach dem Gattungsbegriff des Patentanspruches 1.

Bei der Herstellung von Bremszylindern, so z.B. von kombinierten Betriebsbrems-und Federspeicherbremszylindern, welche insbesondere zur Betätigung von Bremsanlagen und Nutzfahrzeugen vorgesehen sind (EP-A-0 218 845), werden bei bekannten Konstruktionen Flanschverschraubungen, Einrollverbindungen oder durch Prägungen bzw. gestanzte und eingebogene Laschen gebildete Bajonettverbindungen zum Verbinden von Zylinder-bzw. Gehäuseteilen verwendet. Verbindungen dieser bekannten Art sind im allgemeinen fertigungsaufwendig. Zudem benötigen Gehäusebereiche mit starker Belastung so z.B. der Bodenabschnitt von Federspeicherbremszylindern die Verwendung von Verstärkungen, wenn geringe Wandstärken gefordert sind. Die Verwendung von Zylindergehäusen mit durchgehend groß dimensionierter Wandstärke bietet sich hier aus fertigungstechnischen Gründen zwar an, die Materialkosten und das erhöhte Gewicht derartiger Gehäusestruktionen sind jedoch nicht akzeptabel.

Davon ausgehend besteht die Aufgabe der Erfindung darin, einen Bremszylinder der gattungsgemäßen Art so auszugestalten, daß das Gehäuse aus einem kostengünstig herstellbaren Bauteil bei minimalem Gewicht besteht. Es soll insbesondere in einem kostengünstigen Herstellungsverfahren die Möglichkeit geschaffen werden, in einem einzigen Arbeitsgang das Gehäuse des Bremszylinders, so z.B. eines Federspeicherbremszylinders mit an diesem ausgebildeten Anschluß-bzw. Verriegelungselementen zur Verbindung mit einer Zwischenwand auszubilden.

Zur Lösung dieser Aufgabe dienen die Merkmale nach dem Kennzeichnungsteil des Patentanspruches 1.

Der durch das Abstreck-Gleitziehverfahren gefertigte Gehäuse-bzw. Zylinderkörper kennzeichnet sich durch eine optimale Gestaltung seiner Wandstärken, da es durch das verwendete Herstellungsverfahren möglich ist, in ein und demselben Arbeitsgang, ausgehend von einem Bodenteil vergleichsweise großer Wandstärke, einen materialeinheitlich sich daran anschließenden Mantel von geringerer Wandstärke auszubilden. Es wird hierbei dem Umstand Rechnung getragen, daß der Bodenbereich derartiger Zylinder im allgemeinen stärker beansprucht ist als der Bereich des Zylindermantels. In vorteilhafter Weise können während des Abstreck-Gleitziehverfahrens gleichzeitig an der offenen Stirnseite des Gehäuses Segmente ausgebildet werden, welche als Anschlußelemente bzw. Verriegelungssegmente zur Verbindung mit weiteren Gehäuseteilen dienen. In einer vorteilhaften Ausführungsform ist hierbei ein gesonderter Bajonettring vorgesehen, welcher an dem in Abstreck-Gleitziehverfahren gefertigten Gehäuse ausgebildete Verriegelungssegmente und gleichzeitig an einer Zwischenwand eines kombinierten Betriebsbrems-und Federspeicherbremszylinders ausgebildete Verriegelungssegmente bajonettartig übergreift, wenn er sich in bestimmter Drehlage, d.h. Verriegelungsposition gegenüber dem Gehäuse und der Zwischenwand befindet.

Grundsätzlich ist ein derartiger Bajonettring auch zur Verbindung weiterer Gehäuseteile eines Bremszylinders, z.B. eines kombinierten Betriebsbrems-und Federspeicherbremszylinders verwendbar, so für die Verbindung des Gehäuses des Betriebsbremszylinders mit der zwischen Betriebsbremszylinder und Federspeicherbremszylinder befindlichen Zwischenwand. Auch das Gehäuse des Betriebsbremszylinders kann in gleicher Weise wie das Gehäuse des Federspeicherbremszylinders auf dem Wege des Abstreck-Gleitziehverfahrens gefertigt werden, wobei Gehäusebereiche geringerer Beanspruchung mit kleinerer Wandstärke gezogen werden können.

Vorteilhafte Ausgestaltungen an Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Die Zeichnung gibt in Längsschnittansicht einen gemäß der Erfindung gefertigten Bremszylinder in beispielhafter Ausgestaltung eines kombinierten Betriebsbrems-und Federspeicherbremszylinders wieder.

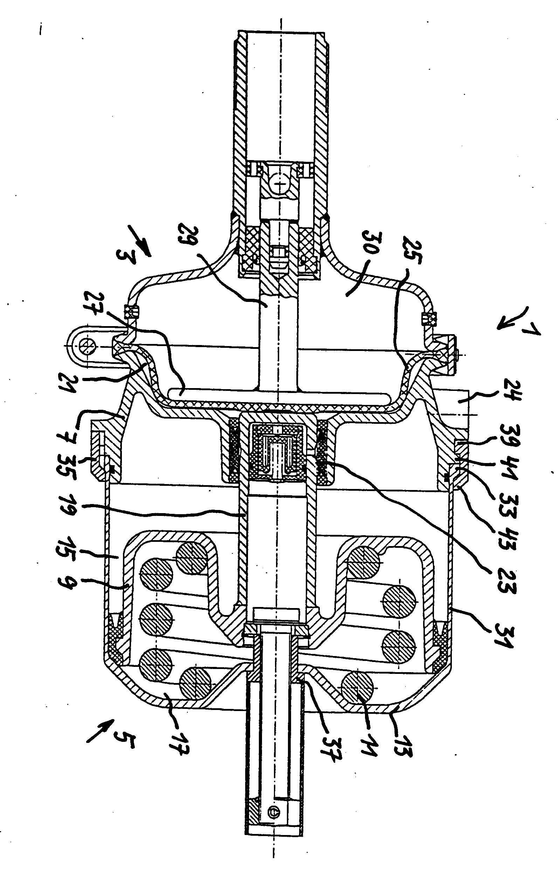

In Fig.1 der Zeichnung ist zur beispielhaften Erläuterung der Erfindung ein kombinierter Betriebsbrems-und Federspeicherbremszylinder, nachfolgend Kombizylinder 1 genannt, dargestellt. Der Kombizylinder 1 besteht aus einem Betriebsbremszylinder 3 und aus einem mit diesem baulich und funktionell verbundenen Federspeicherbremszylinder 5; der Betriebsbremszylinder und der Federspeicherbremszylinder sind durch eine Zwischenwand 7 voneinander getrennt. Innerhalb des Federspeicherbremszylinders ist ein Kolben 9 verschiebbar angeordnet, wobei an einer Seite des Kolbens 9 eine Speicherfeder 11 anliegt. Die Speicherfeder 11 stützt sich an ihrer entgegengesetzten Seite am Boden 13 des Federspeicherbremszylinders 5 ab. In die gemäß Fig.1 links bezüglich des Kolbens 9 bestehende Druckkammer 15 mündet ein (nicht dargestellter) Einlaß, durch welchen Druckluft eingeleitet wird, um den Kolben 9 unter Verspannung der Speicherfeder 11 nach rechts gerichtet zu verschieben. Bei dieser Verschiebung des Kolbens wird die Luft, welche innerhalb der die Speicherfeder aufnehmenden Federkammer 17 besteht, z.B. über ein (nicht dargestelltes) Rückschlagventil herausgedrückt. Wird dagegen zum Zwecke der Abbremsung der Druck in der Druckkamer 15 des Federspeicherbremszylinders bei Betätigung eines an sich bekannten, an den Einlaß der Druckkammer angeschlossenen Ventils entlastet, dann vermag die Speicherfeder 11 den Kolben 9 gemäß Darstellung in Fig. 1 nach links gerichtet zu verschieben.

Der Kolben 9 ist mit einer Kolbenstange 19 verbunden, welche sich durch die Zwischenwand 7 in den Bereich der Druckkammer 21 des Betriebsbremszylinders 3 erstreckt. Eine in der Zwischenwand eingesetzte Dichtung 23 dichtet gegenüber der Außenwand der Kolbenstange während deren Längsbewegungen ab. In die Druckkammer 21 mündet ein Einlaß 24, über welchen zum Betätigen des Betriebsbremszylinders Druckluft eingelassen wird. Die Druckluft wirkt auf die innerhalb des Betriebsbremszylinders 3 eingesetzte Membrane 25 ein, an deren entgegengesetzter Seite ein Druckstück in Form eines Membrantellers 27 vorgesehen ist. Der Membranteller ist mit einer Druckstange 29 verbunden, die sich aus der links bezüglich der Membrane 25 bestehenden Kammer 30 des Betriebsbremszylinders erstreckt und (in nicht dargestellter Weise) mit einem Bremsbetätigungsmechanismus außerhalb des Kombizylinders zusammenwirkt. Hierbei kann es sich beispielsweise um die Betätigungsteile einer Keilspreizbremse eines Kraftfahrzeuges handeln.

Der insoweit beschriebene Kombizylinder 1 ist von herkömmlicher Konstruktion und Wirkungsweise. Gegenüber bekannten Bremszylinder-Konstruktionen ist der Kombizylinder 1 in neuartiger Weise mit einem Gehäuse 31 für den Federspeicherbremszylinder versehen, welcher in nachfolgend beschriebener Weise bauliche Vorteile bietet, insbesondere im Hinblick auf kostengünstige Fertigung. Das Gehäuse 31 des Federspeicherbremszylinders 5 besteht aus Stahl oder Aluminium und ist erfindungsgemäß im Abstreck-Gleitziehverfahren gefertigt. Bei Verwendung eines derartigen Herstellungsverfahrens wird erreicht, daß im Bodenbereich, d.h. am Boden 13, die Wandstärke des Gehäuses entsprechend der Beanspruchung durch Einleitung der Federkraft der Speicherfeder 11 groß dimensioniert werden kann, während im zylindrischen Bereich, d.h. im Mantel, entsprechend der geringeren Beanspruchung eine Reduzierung der Wandstärke vorgenommen werden kann. Bei Anwendung des Abstreck-Gleitziehverfahrens wird hierbei das Material des Gehäuses, ausgehend vom Übergang des Bodens 13 zum Mantel, unter Reduzierung der Wandstärke und axialer Streckung des Mantels gezogen. Während bei bisher gebräuchlichen Tiefziehverfahren nur die Herstellung eines Zylinderrohres mit konstanter Wandstärke möglich ist, ist es unter Anwendung des Abstreck-Gleitziehverfahrens möglich, die Festigkeit der Bodenpartie durch entsprechende Dimensionierung zu gewährleisten; außerdem ist es bei einem derartigen Herstellungsverfahren möglich, an dem der Zwischenwand 7 zugewandten Ende des Gehäuses 31 gleichzeitig Vorsprünge z.B. in Form von Verriegelungssegmenten 33 auszubilden, welche zum Eingriff mit einem nachfolgend beschriebenen Bajonettring 35 vorgesehen sind. Die Verriegelungssegmente 33 werden innerhalb des Abstreckziehvorganges hergestellt, wobei zunächst ein ringförmiger Wulst ausgebildet wird; nachfolgend werden aus dem ringförmigen Wulst unter Abstand zueinander Wandteile herausgestanzt, derart, daß die Verriegelungssegmente 33 verbleiben. Man erhält hierbei eine exakt definierte Umrißkontur der Bajonettverbindung.

Die im Bodenbereich des Gehäuses 31 mit Hilfe des Abstreck-Gleitziehverfahrens verbleibende größere Wandstärke vereinfacht die Befestigung der bei derartigen Kombizylindern vorgesehenen, an sich bekannten Lösebuchse 37 für eine im einzelnen nicht erläuterte Löseeinrichtung insofern, als für eine Reibschweißverbindung zwischen der Lösebuchse und dem Gehäuse ein ausreichendes Volumen des Materials zur Verfügung steht.

Das Gehäuse 31 wird mit Hilfe der vorstehend genannten Bajonettverbindung mit der Zwischenwand 7 verbunden, wobei der Bajonettring 35 mit seinen nach innen weisenden Bajonettsegementen 39 sowohl die Verriegelungssegmente 33 des Gehäuses 31 als auch Verriegelungssegmente 41 der Zwischenwand 7 übergreift, wie in der oberen Schnitthälfte nach Fig.1 zu sehen ist. Die Verriegelungssegmente 33 und 41 werden bei der Montage miteinander in Deckung gebracht, wonach der Bajonettring 35 gemäß Fig.1 von rechts mit seinen Bajonettsegementen 39 durch die Freiräume zwischen den Verriegelungssegmenten 33,41 hindurch in die dargestellte Anschlagposition an eine Schulter des Zwischenringes angelegt und nachfolgend relativ zum Zwischenring und zum Gehäuse 31 gedreht wird, um die in der oberen Schnitthälfte nach Fig.1 wiedergegebene Verriegelungslage einzunehmen. Ein in der Darstellung nach Fig.1 an der rechten Stirnseite des Bajonettringes 35 befindlicher, am Umfang geschlossener Bund 43 legt sich hierbei an eine Flanke der Verriegelungssegmente 33 an. Die beschriebene Bajonettverbindung ist insbesondere bei Anwendung an einem im Abstreck-Gleitziehverfahren gefertigten Zylinder, vorzugsweise Federspeicherbremszylinder, von besonderem Vorteil, da durch dieses Verfahren eine exakt definierte Umrißkontur im Bereich der Verriegelungssegmente 33 gewährleistet ist. Die Bajonettverbindung trägt hierdurch gleichmäßig an allen Segmenten, was die Funktionssicherheit des Federspeicherbremszylinders erheblich erhöht.

### Bezugszeichenliste

- 1: Kombizylinder
- 3: Betriebsbremszylinder
- 5: Federspeicherbremszylinder
- 7: Zwischenwand
- 9: Kolben
- 11: Speicherfeder
- 13: Boden
- 15: Druckkammer
- 17: Federkammer
- 19: Kolbenstange
- 21: Druckkammer
- 23: Dichtung
- 24: Einlaß
- 25: Membrane
- 27: Membranteller
- 29: Druckstange
- 30: Kammer
- 31: Gehäuse
- 33: Verriegelungssegment
- 35: Bajonettring
- 37: Lösebuchse
- 39: Bajonettsegment
- 41: Verriegelungssegment
- 43: Bund

## Patentansprüche

1. Bremszylinder (1) Bremsanlagen von Fahrzeugen, insbesondere Nutzfahrzeugen, mit einem im Gehäuse (31) Bremszylinders (1) angeordneten, durch eine Speicherfeder (11) oder durch ein Druckmittel betätigbaren Kolben (9), welcher mit einer aus dem Gehäuse des Bremszylinders sich erstreckenden, auf Bremsbetätigungselemente einwirkenden Kolbenstange (19) verbunden ist, dadurch gekennzeichnet, daß das Gehäuse (31) des Bremszylinders im Abstreck-Gleitziehverfahren gefertigt ist.

2. Bremszylinder nach Anspruch 1, als kombinierter Betriebsbrems-und Federspeicherbremszylinder mit einem im Gehäuse des Federspeicherbremszylinders (5) angeordneten, durch eine Speicherfeder (11) betätigbaren Kolben (9), welcher auf einer Seite von einer Druckkammer (21) und auf der entgegengesetzten Seite von einer die Speicherfeder (11) aufnehmenden Federkammer (17) begrenzt ist, wobei sich die Speicherfeder einerseits am Kolben (9) und andererseits am Boden (13) des Gehäuses abstützt, dadurch gekennzeichnet, daß das Gehäuse (31) mit inkonstanten Wanddicken im Abstreck-Gleitziehverfahren gefertigt ist, wobei der Boden (13) des Gehäuses größere Wandstärke besitzt als der niedriger beanspruchte, axial sich erstreckende Mantel des Gehäuses (31).

3. Bremszylinder nach Anspruch 1 oder 2, dadurch gekennnzeichnet, daß das Gehäuse (31) aus Stahl besteht.

4. Bremszylinder nach Anspruch 1, dadurch gekennzeichnet, daß das Gehäuse (31) aus Aluminium besteht.

5. Bremszylinder nach Anspruch 2, dadurch gekennzeichnet, daß an dem dem Betriebsbremszylinder (3) zugewandten axialen Ende des Gehäuses (31) im Abstreck-Gleitziehverfahren geformte, radial vorstehende Verriegelungssegmente (41) ausgebildet sind.

6. Bremszylinder nach einem der vorangehenden Ansprüche, dadurch gekennzeichnet, daß das im Abstreck-Gleitziehverfahren gefertigte Gehäuse (31) mittels eines Bajonettringes (35) mit der Zwischenwand (7) zwischen Betriebsbremszylinder und Federspeicherbremszylinder verbunden ist.

7. Bremszylinder nach Anspruch 6, dadurch gekennzeichnet, daß an der Zwischenwand (7) in axialer Fluchtung mit den Verriegelungssegmenten (33) des Gehäuses (31) positionierbare Verriegelungssegmente (41) ausgebildet sind, daß der Bajonettring (35) mit an ihm ausgebildeten Bajonettsegmenten (39) in Verriegelungsposition die Verriegelungssegmente des Gehäuses und der Zwischenwand übergreift, und daß an der bezüglich der Bajonettsegemente (39) entgegengesetzten Stirnseite des Bajonettringes (35) ein zum Gegenhalten der Verrriegelungssegmente dienender Bund (43) ausgebildet ist.

## Claims

1. A brake cylinder (1) for brake systems in vehicles, more particularly commercial vehicles, with a piston (9) which is arranged in the housing (31) of the braker cylinder (1), can be actuated by a storage spring (11) or a pressure medium and is connected with a piston rod (19) extending out of the housing of the brake cylinder and acting upon brake actuating elements, characterised in that the housing (31) of the brake cylinder is manufactured in a slide-drawing process.

2. A brake cylinder according to claim 1, as combined service brake and safety brake cylinder with a piston (9) which is arranged in the housing of the safety brake cylinder (5), can be acted upon by a storage spring (11), and is limited at one end by a pressure chamber (15) and at the other end by a spring chamber (17) accomodating the storage spring (11), the storage spring being supported at one end against the piston (9) and at the other end against the base (13) of the housing, characterised in that the housing (31) is manufactured with varying wall thicknesses in a slide-drawing process, the base (13) of the housing having a greater wall thickness than the axially extending casing of the housing (31) which is subjected to lower loading.

3. A brake cylinder according to claim 1 or 2, characterised in that the housing (31) is made of steel.

4. A brake cylinder according to claim 1, characterised in that the housing (31) is made of aluminium.

5. A brake cylinder according to claim 2, characterised in that radially projecting locking segments (41) are formed onto the axial end of the housing (31) facing the operating brake cylinder (3) in the slide-drawing process.

6. A brake cylinder according to one of the preceding claims, characterised in that the housing (31) manufactured in a strech-slide-drawing process is connected by means of a bayonet ring (35) with the intermediate wall (7) between the service brake cylinder.

7. A brake cylinder according to claim 6, characterised in that locking segments (41), which can be positioned in axial alignment with the locking segments (33) of the housing (31), are formed on the intermediate wall (7), the bayonet ring (35) engages over the locking segments of the housing and intermediate wall in the locking position with bayonet segments (39) formed thereon, and a collar (43) used for supporting the locking segments is formed on the end face of the bayonet ring (35) opposite the bayonet segments (39).

## Revendications

1. Cylindre de frein (1) pour des installations de freinage de véhicules, en particulier de véhicules utilitaires, comprenant un piston (9) disposé dans le carter (31) du cylindre de frein (1) et susceptible d'être actionné par un ressort accumulateur (11) ou par un milieu sous pression, lequel piston (9) est relié à une tige de piston (19) qui s'étend en dehors du carter du cylindre de frein et qui est susceptible d'agir sur des éléments de commande du frein, caractérisé par le fait que le carter (31) du cylindre de frein est fabriqué suivant un procédé d'étirage (à anneau) ou d'étirage de parois.

2. Cylindre de frein selon la revendication 1, sous la forme combinée d'un cylindre de frein de service et d'un cylindre de frein à ressort accumulateur, comportant un piston (9) qui est disposé dans le carter du cylindre de frein à ressort accumulateur (5) et qui est susceptible d'être actionné par un ressort accumulateur (11), lequel piston (9) est limité, sur un côté, par une chambre de pression (21) et, sur le côté opposé, par une chambre à ressort (17) susceptible de recevoir le ressort accumulateur (11), la réalisation étant telle que le ressort accumulateur prend appui, d'une part, sur le piston (9), et, d'autre part, contrôle le fond (13) du carter, caractérisé par le fait que le carter (31) est fabriqué, avec des épaisseurs de parois non constantes, par la mise en oeuvre du procédé d'étirage (à anneau) ou d'étirage de parois, le fond (13) présentant une épaisseur de parois qui est supérieure à celle de l'enveloppe du carter (31) qui s'étend axialement, et qui est sollicité à un moindre degré.

3. Cylindre de frein selon la revendication 1 ou 2, caractérisé par le fait que le carter (31) est constitué avec de l'acier.

4. Cylindre de frein selon la revendication 1, caractérisé par le fait que le carter (31) est constitué avec de l'aluminium.

5. Cylindre de frein selon la revendication 2, caractérisé par le fait qu'à l'extrémité axiale du carter (31) qui est voisine du cylindre de frein de service (3), sont réalisés des segments de verrouillage (41) saillants radialement et qui sont conformés par la mise en oeuvre du procédé d'étirage (à anneau) ou d'étirage de parois.

6. Cylindre de frein selon l'une des revendications précédentes, caractérisé par le fait que le carter (31) qui est fabriqué par la mise en oeuvre du procédé d'étirage (à anneau) ou d'étirage de parois, est relié, à l'aide d'un anneau à baïonnette (35), avec la paroi intermédiaire (7) située entre le cylindre de frein de service et le cylindre de frein à ressort accumulateur.

7. Cylindre de frein selon la revendication 6, caractérisé par le fait que sur la paroi intermédiaire (7), et en alignement axial avec les éléments de verrouillage (33) du carter (31), sont formés des éléments de verrouillage (41) qui sont susceptibles d'être positionnés, que l'anneau à baïonnette (35) passe, avec des segments de baïonnette (39) en position de verrouillage, au-dessus des éléments de verrouillage du carter et de la paroi intermédiaire, et que sur le côté frontal de l'anneau à baïonnette (35), qui est éloigné des segments de baïonnette (35), est conformée une collerette (43) qui sert à assurer la position des éléments de verrouillage.
